# FASCICULE DE BREVET EUROPEEN

(11) **EP 1 152 941 B1**
(45) Date de publication et mention de la délivrance du brevet: **27.08.2003**
(21) Numéro de dépôt: 00993315.1
(22) Date de dépôt: 06.12.2000
(51) Int. Cl.: B62D 55/32

(54) **DISPOSITIF DE SOULEVEMENT DE GALET DE ROULEMENT D'UN VEHICULE A CHENILLES**
AUFHEBEANORDNUNG FÜR RAUPENFAHRZEUGRAD
DEVICE FOR LIFTING A CATERPILLAR ROAD WHEEL

(30) Priorité: 07.12.1999 FR 9915506
(43) Date de publication de la demande: 14.11.2001
(73) Titulaire: Kleber Track, 78035 Versailles Cedex (FR)
(72) Inventeur: ELOY, Jean-Pierre, F-02580 Etreaupoint (FR)
(74) Mandataire: Diernaz, Christian
(86) Numéro de dépôt international: EP0012280
(87) Numéro de publication internationale: WO01042078

(56) Documents cités:
- US-A- 5 870 812

## Description

L'invention concerne le domaine des engins à chenilles comportant des galets de roulement et plus particulièrement un dispositif pour soulever lesdits galets de roulement afin de permettre des opérations de maintenance et/ou de remplacement.

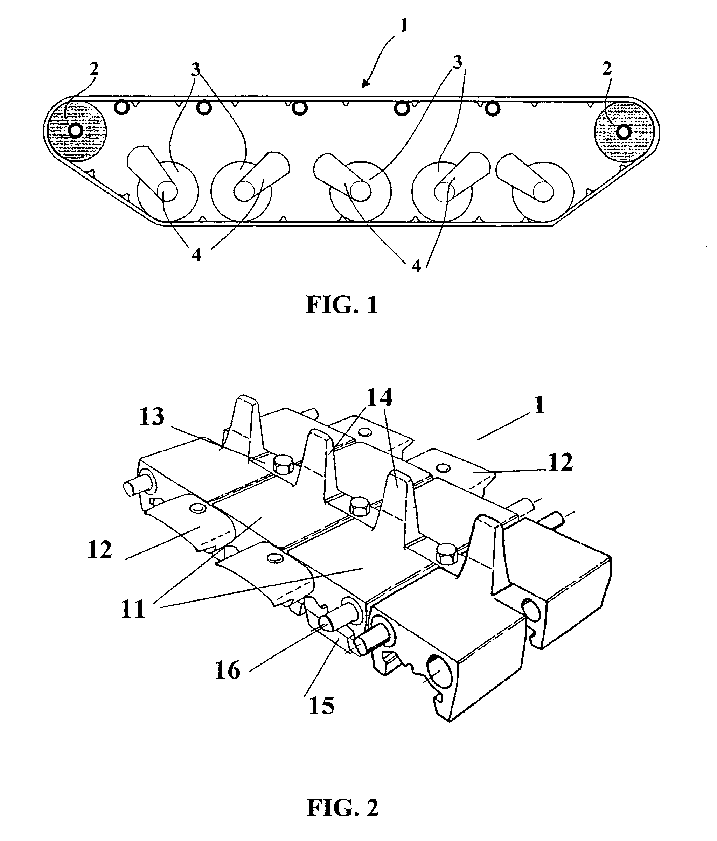

On connaît différents véhicules et en particulier des engins blindés mus par des chenilles mises en tension entre une poulie de tension et une couronne d'entraînement (voir la figure **1** représentant schématiquement une vue en coupe d'un véhicule sur chenilles). Chaque chenille **1** présente une surface de roulement interne et une surface de roulement externe, cette dernière surface étant en contact avec le sol pendant le roulage du véhicule. Chaque chenille **1** est formée d'une pluralité de maillons métalliques **11** (visibles sur la figure **2**), chaque maillon s'étendant dans la direction transversale (c'est-à-dire dans la direction perpendiculaire à la direction de rotation de ladite chenille), chaque maillon **11** étant relié à ses suivants par des connecteurs métalliques **12, 13** fixés, avec des moyens appropriés, de part et d'autre desdits maillons **11**, de façon à autoriser un mouvement de rotation limité d'un maillon par rapport à ses voisins pendant le roulage du véhicule. Deux maillons adjacents sont reliés l'un à l'autre par un premier connecteur **13** placé en partie médiane, tandis que deux autres connecteurs **12** sont montés sur des axes **16** sortant latéralement desdits maillons. Une fois en place, les connecteurs **12** font saillie latéralement de chaque côté de chaque chenille, c'est-à-dire à la fois du côté intérieur et du côté extérieur au véhicule. De plus, chaque maillon **11** comporte au moins une dent **14** formant saillie sur la surface de roulement interne de chaque chenille, lesdites dents **14** étant destinées à coopérer avec les galets de roulement **3** roulant sur la surface interne pour assurer le guidage de ladite chenille pendant le déplacement du véhicule. Chaque galet de roulement **3**, monté sur un bras de balancier **4**, est formé par l'assemblage de deux demi galets **5** et **6** délimitant une gorge de guidage des dents **14**.

Dans certaines utilisations, les maillons métalliques peuvent comporter des semelles en caoutchouc **15** destinées à venir en contact avec le sol pendant le roulage du véhicule de façon obtenir un roulage moins agressif pour le sol et à rendre plus confortable (moins bruyant) ledit roulage. Une telle chenille est en particulier fabriquée par la société DIEHL pour la partie métallique et distribuée sous le nom KLEBER TRACK ou DIEHL.

Il est parfois nécessaire d'intervenir sur un tel véhicule à chenilles afin procéder à des opérations de maintenance ou de remplacement de l'un quelconque des galets de roulement. Dans ce but, on doit procéder au soulèvement d'un galet de façon à désolidariser la chenille dudit galet à réparer ou à remplacer. Il est connu d'utiliser un dispositif de soulèvement d'un galet de roulement, ledit dispositif comportant un bras dont une extrémité est pourvue d'une fourche destinée à coopérer avec le balancier du galet à soulever et dont l'autre extrémité peut être montée pivotante sur l'un des maillons de la chenille et de façon temporaire. En déplaçant lentement le véhicule, un opérateur amène la fourche du bras en contact avec le balancier dans un premier temps, et en poursuivant le déplacement dudit véhicule, la partie de la chenille en contact avec le sol restant fixe par rapport audit sol, le bras de soulèvement impose au balancier de décrire un arc de cercle ayant pour effet de soulever le galet porté par ledit balancier. À ce moment, il est aisé après avoir immobilisé le véhicule d'intervenir sur le galet soulevé.

À l'utilisation, il est apparu que la sécurité des opérateurs utilisant ce type de lève-galet pouvait être mise en cause au cours des différentes manoeuvres de soulèvement et d'abaissement, voire pendant les opérations de maintenance sur le galet soulevé dès lors que le bras de soulèvement pouvait riper latéralement au maillon sur lequel il était monté pivotant. La sécurité de l'opérateur peut être également mise en cause par le fait qu'il doit intervenir sous le véhicule pour engager le bras de soulèvement avec le balancier du galet à soulever.

L'objet de la présente invention est un dispositif de levage d'un galet de roulement d'une chenille à connecteurs qui prévient les problèmes de sécurité mentionnés tout en conservant le principe de soulèvement brièvement rappelé ci-dessus.

Le dispositif lève-galet selon l'invention est destiné à soulever un galet de roulement d'un véhicule équipé de chenilles, chaque chenille étant formée d'une pluralité de maillons disposés les uns à côté des autres dans la direction de roulage de ladite chenille, ces maillons étant reliés deux à deux au moyen de connecteurs placés axialement à l'intérieur et à l'extérieur par rapport auxdits maillons, chaque chenille présentant une surface externe et une surface interne, la surface interne servant de surface de roulement pour des galets de roulement montés rotatifs sur des balanciers eux mêmes montés pivotant sur le véhicule et la surface externe étant destinée à venir en contact avec le sol. Chaque maillon formant la chenille est formé d'un corps comportant au moins une dent de guidage en saillie sur la surface interne de la chenille et une semelle en caoutchouc fixée sur ledit maillon de façon à venir en contact avec le sol. Le dispositif lève-galet comprend un bras de soulèvement dont une extrémité est destinée à coopérer avec le balancier du galet à soulever et dont l'autre extrémité est montée pivotante sur un sabot fixé de façon temporaire sur un premier connecteur situé du côté intérieur de ladite chenille.

Le dispositif selon l'invention est caractérisé en ce qu'il est en outre prévu :
- un second sabot fixé de façon temporaire sur le connecteur axialement opposé au connecteur sur lequel est fixé le premier sabot;
- des moyens de couplage entre les premier et second sabots pour maintenir constant l'espacement axial entre lesdits sabots dès que ceux-ci ont été mis en place sur leur connecteur respectif et pendant toute l'opération de soulèvement de manière à assurer la sécurité de ladite opération.

Par côté intérieur d'une chenille d'un véhicule à chenilles, on entend le coté de la chenille faisant face à l'autre chenille dudit véhicule.

L'adjonction de deux ailes sur la partie du sabot intérieur portant le bras de soulèvement, lesdites deux ailes encadrant partiellement le bras de soulèvement dans son mouvement de rotation, facilite le guidage dudit bras pendant les opérations de soulèvement tout en améliorant encore la sécurité du dispositif selon l'invention au cours des différentes manoeuvres.

Par ailleurs, un véhicule, tel que décrit précédemment, est très souvent sujet à des chocs répétés dus principalement aux irrégularités du terrain sur lequel ledit véhicule est amené à évoluer. Ces chocs conduisent progressivement à une déformation de flexion des axes de balanciers faisant que lesdits axes ne sont plus perpendiculaires à la caisse du véhicule ce qui entraîne une difficulté supplémentaire pour accrocher la fourche du bras de soulèvement sur lesdits balanciers pouvant faire naître de ce fait une nouvelle insécurité. De façon avantageuse, la face interne de la fourche, c'est-à-dire une face située du côté du galet à soulever, présente une inclinaison non nulle avec un plan vertical de manière à ce qu'une perpendiculaire à cette face soit sensiblement parallèle à la direction du balancier après déformation. Cette inclinaison de la face interne est préférentiellement réalisée par un amincissement progressif de la partie du bras de soulèvement formant la fourche.

### Description des figures.

Figure **1** : vue schématique d'une partie d'un véhicule équipé de deux chenilles;
figure **2** : vue partielle de la chenille de la figure **1** à maillons métalliques reliés par des connecteurs;
figure **3** : vue partielle du véhicule de la figure **1** montrant un galet de roulement en appui sur la surface interne d'une chenille;
figure **4** : vue du dispositif de soulèvement selon l'invention en position avant le soulèvement;
figure **5** : le dispositif de la figure **4** en position de soulèvement;
figure **6** : vue d'un bras particulièrement adapté pour le soulèvement d'un galet de roulement dont l'axe de balancier n'est plus perpendiculaire à la caisse du véhicule.

Sur la figure **1**, un véhicule à chenille est représenté en coupe longitudinale et de manière très schématique. On distingue, vu du côté intérieur véhicule une chenille **1** tendue entre une poulie de tension **2** et une couronne d'entraînement **2'** et comportant cinq galets de roulement **3** destinés à appliquer ladite chenille contre le sol pendant le roulage. Chaque galet de roulement **3** est formé par l'assemblage de deux demi galets et est monté rotatif à une extrémité d'un balancier **4** dont l'autre extrémité est montée pivotante sur la caisse du véhicule, non montrée dans la présente figure.

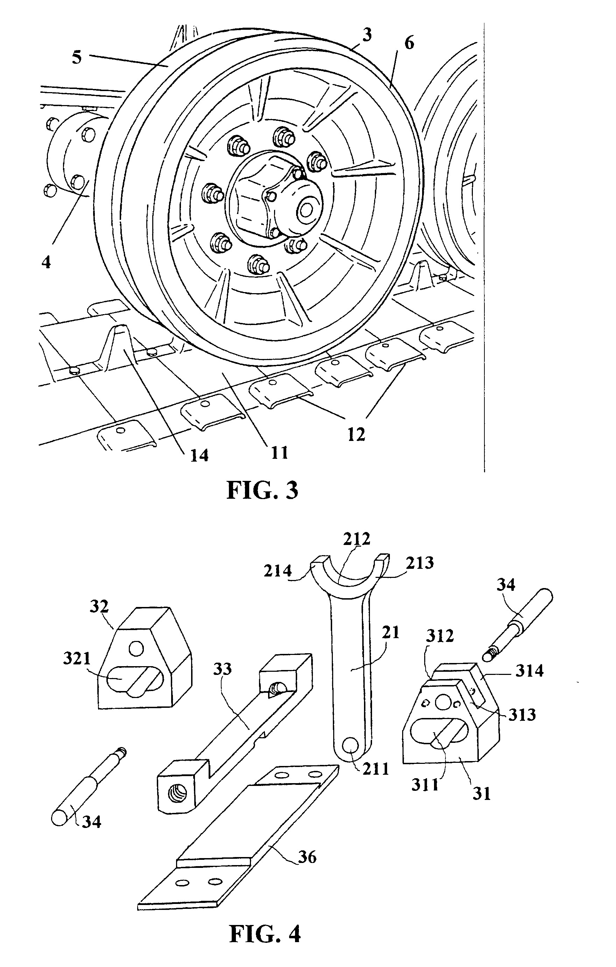

La figure **2** montre une vue partielle d'une chenille du véhicule de la figure **1**; sur cette figure **2**, on distingue plusieurs maillons métalliques **11** pourvus sur leur face interne avec une dent destinée à coopérer avec les galets de roulement et les poulies de tension pour assurer le guidage de ladite chenille comme cela est visible sur la figure **3** montrant un galet de roulement **3** en place sur une chenille.

La figure **4** montre une vue perspective éclatée des différentes pièces formant le lève-galet selon l'invention. Le lève-galet selon l'invention comprend :
- un premier sabot extérieur **32** destiné à être placé sur la chenille du côté extérieur du véhicule, ce sabot **32** comportant un orifice **321** dont la section transversale est appropriée pour permettre l'introduction de l'extrémité d'un premier connecteur;
- un second sabot intérieur **31** comportant également un orifice **311** pour pouvoir recevoir l'extrémité d'un second connecteur axialement opposé au premier connecteur; ce sabot intérieur **31** comprend dans sa partie haute une rainure **312** délimitée par deux ailes **313** et **314;**
- une entretoise **33** placée entre les premier et second sabots **31** et **32** et fixés auxdits sabots par des moyens **34** afin de maintenir constant l'espacement entre lesdits sabots;
- une embase **36** servant de support aux deux sabots **31** et **32** et destinée à être placée entre le sol et la chenille.

En outre, le dispositif lève galet comprend un bras de soulèvement **21** dont une extrémité **211** est prévue pour être montée pivotante à l'intérieur de la rainure **312** sur le sabot intérieur **31** autour d'un axe de pivot traversant perpendiculairement les deux ailes **313** et **314** (dans le cas présent, le moyen de fixation **34** du sabot intérieur **31** à l'entretoise **33** joue le rôle d'axe de pivot). L'autre extrémité **212** du bras de soulèvement **21** comporte une fourche à deux branches **213, 214** destinée à venir coopérer avec l'extrémité d'un balancier porte galet en vue du levage dudit galet. Les deux extrémités **211, 212** du bras définissent la direction longitudinale dudit bras. Dans la pratique, on met en place le dispositif lève-galet dans la partie de le chenille située entre l'une des poulies de tension et le premier galet de roulement en assemblant les différentes parties constituant ledit dispositif autour de la chenille de façon à ce que lorsque le véhicule est mis en mouvement, le dispositif reste solidaire de la chenille et vient en contact avec le sol. À ce moment là, on positionne la fourche du bras de soulèvement de façon à ce qu'elle coopère avec l'extrémité du balancier portant le galet à soulever. Après soulèvement et maintenance, on procède de la même manière en sens inverse.

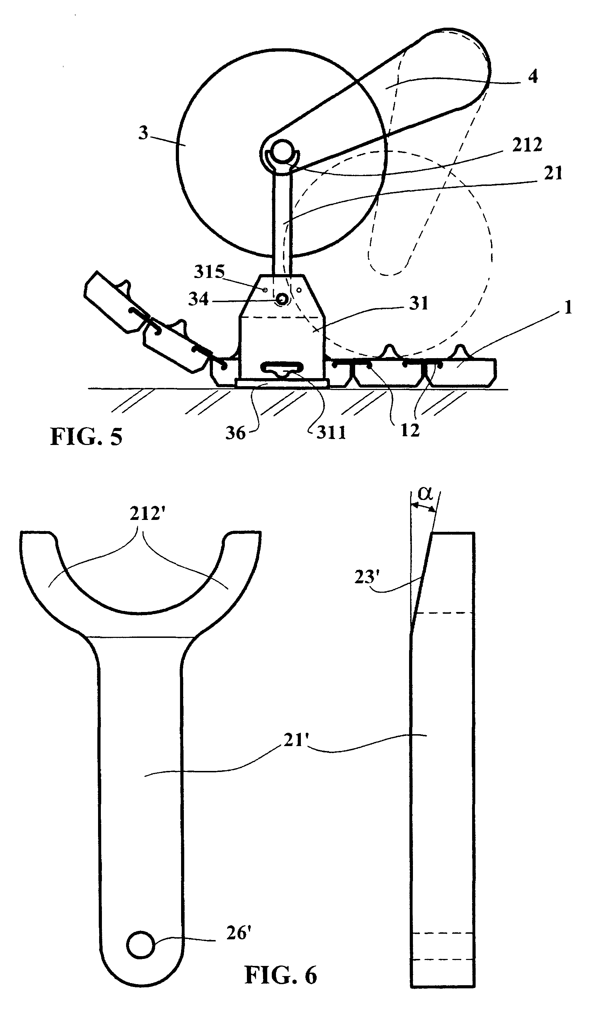

La figure **5** montre le dispositif selon l'invention dans sa position finale de soulèvement d'un galet de roulement **3.** Sur cette figure **5,** on distingue le dispositif de levage vu de l'intérieur du véhicule; un connecteur **12** est engagé à l'intérieur de l'orifice **311** prévu sur le sabot intérieur **31,** ledit sabot étant solidaire de la chenille **1** grâce à la présence d'un sabot extérieur (non visible) auquel il est relié mécaniquement au moyen d'une entretoise. Le bras de levage **21** monté pivotant autour de l'axe **34** est en position verticale par rapport au sol; la fourche **212** du bras de levage **21** coopère avec l'axe du galet **3** sur le balancier **4** pour maintenir le galet à une distance suffisante pour permettre l'intervention sur ledit galet. Le balancier **4** et le galet de roulement **3** sont représentés en pointillés en position basse, c'est-à-dire en position de roulage.

L'embase **36** est montée sur la surface extérieure de la chenille pour venir directement en contact avec le sol et réaliser ainsi une meilleure assise du dispositif de levage et en conséquence une plus grande sécurité; des moyens sont prévus pour relier mécaniquement cette embase avec chaque sabot interne et externe.

Afin d'éviter la présence d'un opérateur pour engager la fourche du bras sur le balancier au moment de l'avancement du véhicule pour réaliser l'opération de levage, il est prévu de mettre en place une broche dans des orifices **315** appropriés réalisés sur les deux ailes **313** et **314** du sabot intérieur **31.** De cette façon, après la mise en place du dispositif et avant de faire avancer le véhicule, le bras de soulèvement est mis en appui sur la broche et est incliné au dessus de l'horizontale vers le balancier de sorte que, pendant l'avancement du véhicule, l'engagement dudit bras sur le balancier puisse se faire de manière automatique sans nécessiter l'intervention d'un opérateur.

La figure **6** montre une vue en plan et une vue de profil d'une variante de bras de soulèvement offrant l'avantage de pouvoir s'adapter au soulèvement de galet de roulement monté sur un balancier, ledit balancier présentant des déformations résultant des sollicitations subies au cours du roulage du véhicule. Ces sollicitations provoquent une déformation de flexion plus ou moins grande de chaque balancier, ce qui se traduit par le fait que l'axe de rotation du galet monté sur ledit balancier n'est plus dans un plan horizontal par rapport au sol. Pour permettre l'engagement de la fourche **212'** du bras de soulèvement **21'** avec l'axe d'un galet même si ce dernier n'est plus dans un plan horizontal par rapport au sol, l'une des faces **23'** de la fourche **212'** est plane et fait un angle α non nul avec la direction longitudinale dudit bras. De cette façon, il est possible d'engager avec la sécurité nécessaire la fourche du bras de levage avec l'axe du galet de roulement.

## Revendications

1. Dispositif lève-galet pour soulever un galet de roulement d'un véhicule équipé de chenilles, chaque chenille (**1**) étant formée d'une pluralité de maillons (**11**) disposés les uns à côté des autres dans la direction de roulage de ladite chenille, ces maillons (**11**) étant reliés deux à deux au moyen de connecteurs (**12**) placés axialement à l'intérieur et à l'extérieur, chaque chenille présentant une surface externe et une surface interne, la surface interne servant de surface de roulement pour des galets de roulement (**3**), chaque galet de roulement (**3**) étant monté rotatif autour d'un axe porté par un balancier (**4**) et la surface externe étant destinée à venir en contact avec le sol, chaque maillon (**11**) étant formé d'un corps comportant une dent de guidage (**14**) en saillie sur la surface interne de la chenille, le dispositif lève-galet comprenant un bras de soulèvement (**21**) dont une extrémité (**22**) est destinée à coopérer avec l'axe de rotation dudit galet sur le balancier (**4**) et dont l'autre extrémité (**23**) est montée pivotante sur un sabot (**31**) fixé de façon temporaire sur un premier connecteur situé du côté intérieur de ladite chenille, le dispositif étant **caractérisé en ce qu'**il est en outre prévu :
- un second sabot (**32**) fixé de façon temporaire sur le connecteur axialement opposé au connecteur sur lequel est fixé le premier sabot (**31**);
- des moyens de couplage (**33, 34**) entre les premier et second sabots pour maintenir constant l'espacement axial entre lesdits sabots dès que ceux-ci ont été mis en place sur leur connecteur respectif et pendant toute l'opération de soulèvement de manière à assurer la sécurité de ladite opération.

2. Dispositif lève-galet selon la revendication **1 caractérisé en ce que** les moyens de couplage entre les premier et second sabots consistent en une entretoise (**33**) et des moyens de fixation (**34**) de ladite entretoise à chacun desdits sabots.

3. Dispositif lève-galet selon la revendication **1** ou la revendication **2 caractérisé en ce qu'**il est en outre prévu une embase (**36**) disposée entre les sabots intérieur et extérieur et sur la surface extérieure de la chenille de façon à venir en appui sur le sol pour réaliser une meilleure assise dudit dispositif.

4. Dispositif lève-galet selon l'une des revendications **1** à **3 caractérisé en ce que** le sabot (**31**) ponant le bras de soulèvement (**21**) comporte, à l'une de ses extrémités, deux ailes (**313, 314**) formant une rainure (**312**) destinée à guider le bras de soulèvement (**21**) dans son mouvement de rotation autour de son axe de pivot traversant lesdites deux ailes (**313, 314**).

5. Dispositif lève-galet selon l'une des revendications **1** à **4 caractérisé en ce que** l'extrémité du bras de soulèvement (**21'**) destinée à coopérer avec le balancier du galet à soulever comporte une fourche (**212'**), ladite extrémité comportant une face interne (**23'**), destinée à être située du côté du galet à soulever, présentant une inclinaison α non nulle avec un plan quelconque contenant la direction longitudinale du bras de soulèvement (**21'**) de manière à ce qu'une droite perpendiculaire à cette face soit sensiblement parallèle à la direction de l'axe du balancier pour compenser une éventuelle déformation de ce dernier.

6. Dispositif lève-galet selon l'une des revendications **1** à **5 caractérisé en ce qu'**il est en outre prévu une broche traversant le sabot (**31**) sur lequel est monté le bras de soulèvement (**21**) pour maintenir ledit bras dans une position inclinée en direction du balancier du galet à soulever de façon à éviter l'intervention d'un opérateur et ainsi augmenter la sécurité de l'opération de soulèvement.

## Patentansprüche

1. Rollenhebervorrichtung zum Anheben einer Laufrolle eines mit Raupen ausgestatteten Fahrzeugs, wobei jede Raupe (1) aus vielen Kettengliedern (11) gebildet ist, die in Rollrichtung der Raupe nebeneinander angeordnet sind, wobei diese Kettenglieder (11) paarweise mit Hilfe von Verbindern (12) verbunden sind, die axial innen und außen angeordnet sind, wobei jede Raupe eine Außen- und eine Innenfläche aufweist, wobei die Innenfläche als Lauffläche für Laufrollen (3) dient, wobei jede Laufrolle (3) um eine Achse drehbar montiert ist, die von einem Schwinghebel (4) getragen wird, und die Außenfläche dazu bestimmt ist, mit dem Boden in Kontakt zu kommen, wobei jedes Kettenglied (11) von einem Körper gebildet wird, der einen auf der Innenfläche der Raupe vorstehenden Führungszahn (14) aufweist, wobei die Rollenhebervorrichtung einen Hebearm (21) aufweist, dessen eines Ende (22) dazu bestimmt ist, mit der Drehachse der Rolle auf dem Schwinghebel (4) zusammenzuwirken, und dessen anderes Ende (23) auf einem Schuh (31) schwenkbar montiert ist, der kurzzeitig an einem ersten Verbinder befestigt ist, der sich auf der Innenseite der Raupe befindet, wobei die Vorrichtung **dadurch gekennzeichnet ist, dass** weiter vorgesehen sind:
- ein zweiter Schuh (32), der kurzzeitig an dem Verbinder befestigt wird, der dem Verbinder axial entgegengesetzt liegt, an welchem der erste Schuh (31) befestigt ist,
- Koppelmittel (33, 34) zwischen dem ersten und dem zweiten Schuh, um den axialen Abstand zwischen den Schuhen, sobald diese auf ihrem jeweiligen Verbinder angeordnet sind, und während des ganzen Hebevorgangs konstant zu halten, um die Sicherheit des Vorgangs zu gewährleisten.

2. Rollenhebervorrichtung nach Anspruch 1, **dadurch gekennzeichnet, dass** die Koppelmittel zwischen dem ersten und dem zweiten Schuh aus einem Abstandsstück (33) und Befestigungsmitteln (34) des Abstandsstücks an jedem der Schuhe bestehen.

3. Rollenhebervorrichtung nach Anspruch 1 oder 2, **dadurch gekennzeichnet, dass** außerdem eine Grundplatte (36) vorgesehen ist, die zwischen dem inneren und dem äußeren Schuh und auf der Außenfläche der Raupe angeordnet ist, um auf dem Boden aufzuliegen, damit eine bessere Lagerung der Vorrichtung erhalten wird.

4. Rollenhebervorrichtung nach einem der Ansprüche 1 bis 3, **dadurch gekennzeichnet, dass** der den Hebearm (21) tragende Schuh (31) an einem seiner Enden zwei Flügel (313, 314) aufweist, die eine Nut (312) bilden, welche dazu bestimmt ist, den Hebearm (21) in seiner Drehbewegung um seine Schwenkachse zu führen, welche die beiden Flügel (313, 314) durchquert.

5. Rollenhebervorrichtung nach einem der Ansprüche 1 bis 4, **dadurch gekennzeichnet, dass** das Ende des Hebearms (21'), das dazu bestimmt ist, mit dem Schwinghebel der anzuhebenden Rolle zusammenzuwirken, eine Gabel (212') aufweist, wobei das Ende eine Innenfläche (23') aufweist, die dazu bestimmt ist, auf der Seite der anzuhebenden Rolle angeordnet zu werden und eine Neigung α ungleich Null mit einer beliebigen Ebene besitzt, die die Längsrichtung des Hebearms (21') enthält, damit eine senkrechte Gerade zu dieser Fläche im wesentlichen parallel zur Richtung der Achse des Schwinghebels liegt, um eine mögliche Verformung dieses letzteren auszugleichen.

6. Rollenhebervorrichtung nach einem der Ansprüche 1 bis 5, **dadurch gekennzeichnet, dass** außerdem ein den Schuh (31) durchquerender Stift vorgesehen ist, auf den der Hebearm (21) montiert ist, um den Arm in einer in Richtung des Schwinghebels der anzuhebenden Rolle geneigten Stellung zu halten, um das Eingreifen einer Bedienungsperson zu vermeiden und somit die Sicherheit des Hebevorgangs zu erhöhen.

## Claims

1. A roller lifting device intended to lift a track roller of a vehicle equipped with tracks, each track (**1**) being formed by a plurality of chain links (**11**) disposed next to one another in the direction in which the said track rolls, these chain links (**11**) being connected in twos by means of connectors (**12**) placed axially inside and outside, each track having an external surface and an internal surface, the internal surface serving as a rolling surface for track rollers (**3**), each track roller (**3**) being mounted in rotary manner about an axis borne by a rocker (**4**) and the external surface being intended to come into contact with the ground, each chain link (**11**) being formed by a body having at least one guide tooth (**14**) projecting from the internal surface of the track, the roller lifting device comprising a lifting arm (**21**) whereof one end (**22**) is intended to co-operate with the axis of rotation of the said roller on the rocker (**4**) and whereof the other end (**23**) is mounted pivotally on a shoe (**31**) fixed temporarily to a first connector located on the inside of the said track, the device being **characterised in that** the following are furthermore provided:
- a second shoe (**32**) fixed temporarily to that connector which is axially opposed to the connector to which the first shoe is fixed (**31**);
- coupling means (**33, 34**) between the first and second shoes to keep the axial spacing between the said shoes constant once the latter have been positioned on their respective connector and throughout the lifting operation so that the safety of the said operation is ensured.

2. A roller lifting device according to Claim **1**, **characterised in that** the coupling means between the first and second shoes comprise a spacer element (**33**) and means of fixing (**34**) the said spacer element to each of the said shoes.

3. A roller lifting device according to Claim **1** or **2, characterised in that** there is furthermore provided a base plate (**36**) disposed between the inside and outside shoes and the outside surface of the track such that it comes to bear against the ground to provide better seating for the said device.

4. A roller lifting device according to one of Claims **1** to **3, characterised in that** the shoe (**31**) bearing the lifting arm (**21**) has at one of its ends two limbs (**313, 314**) forming a groove (**312**) intended to guide the lifting arm (**21**) in its rotary movement about its pivot axis passing through the two limbs (**313, 314**).

5. A roller lifting device according to one of Claims **1** to **4, characterised in that** the end of the lifting arm (**21'**) intended to co-operate with the rocker of the roller to be lifted has a fork (**212'**), the said end having an inside face (**23'**) intended to be located on the side of the roller to be lifted and being at an incline α not equal to zero in relation to any plane containing the longitudinal direction of the lifting arm (**21'**) such that a straight line perpendicular to this face is substantially parallel to the direction of the axis of the rocker to compensate any deformation of the latter.

6. A roller lifting device according to one of Claims **1** to **5**, **characterised in that** there is furthermore provided a pin passing through that shoe (**31**) on which the lifting arm (**21**) is mounted in order to maintain the said arm in a position inclined in the direction of the rocker of the roller to be lifted such that the need for work by an operator is avoided and thus the degree of safety of the lifting operation is increased.
